# EUROPÄISCHE PATENTSCHRIFT

(11) **EP 1 257 751 B1**
(45) Veröffentlichungstag und Bekanntmachung des Hinweises auf die Patenterteilung: **09.07.2003**
(21) Anmeldenummer: 01905787.6
(22) Anmeldetag: 17.02.2001
(51) Int. Cl.: F16H 45/02

(54) **REIBKUPPLUNG, INSBESONDERE WANDLERÜBERBRÜCKUNGSKUPPLUNG FÜR EINEN HYDRODYNAMISCHEN DREHMOMENTWANDLER**
FRICTION CLUTCH, ESPECIALLY A TORQUE CONVERTER LOCKUP CLUTCH FOR A HYDRODYNAMIC TORQUE CONVERTER
EMBRAYAGE A FRICTION, EN PARTICULIER EMBRAYAGE DE PONTAGE DE CONVERTISSEUR DESTINE A UN CONVERTISSEUR DE COUPLE HYDRODYNAMIQUE

(30) Priorität: 23.02.2000 DE 10008167
(43) Veröffentlichungstag der Anmeldung: 20.11.2002
(73) Patentinhaber: ZF FRIEDRICHSHAFEN Aktiengesellschaft, 88038 Friedrichshafen (DE)
(72) Erfinder: GRANDERATH, Paul, 88074 Meckenbeuren (DE)
(86) Internationale Anmeldenummer: EP0101768
(87) Internationale Veröffentlichungsnummer: WO01063149

(56) Entgegenhaltungen:
- EP-A- 0 819 863
- DE-A- 4 302 773
- DE-A- 4 420 959
- DE-A- 10 009 576
- DE-A- 19 622 593
- DE-C- 19 714 563
- US-A- 5 566 802
- PATENT ABSTRACTS OF JAPAN vol. 1995, no. 09, 31. Oktober 1995 (1995-10-31) -& JP 07 145858 A (NISSAN MOTOR CO LTD), 6. Juni 1995 (1995-06-06)
- PATENT ABSTRACTS OF JAPAN vol. 2000, no. 14, 5. März 2001 (2001-03-05) -& JP 2000 329212 A (TOYOTA CENTRAL RES & DEV LAB INC;TOYOTA MOTOR CORP), 30. November 2000 (2000-11-30)

## Beschreibung

Die Erfindung betrifft eine schlupfende Reibkupplung, die mindestens ein Paar naßlaufender Reibflächen aufweist und insbesondere eine schlupfende Wandlerüberbrückungskupplung für den hydraulischen Drehmomentwandler eines Kraftfahrzeug-Automatgetriebes, nach dem Oberbegriff des Anspruchs 1. Eine derartige Reiskupplung kann als aus der EP-A-819 863 bekannt gelten.

Hydrodynamische Drehmomentwandler mit Wandlerüberbrükkungskupplung für die Automatgetriebe von Kraftfahrzeugen sind vielfältig bekannt. So beschreibt die DE A 199 09 349 einen derartigen hydrodynamischen Drehmomentwandler, der ein Pumpenrad aufweist, welches über ein Wandlergehäuse mit einer Antriebswelle antriebsseitig verbunden ist, ein mit einer Abtriebswelle verbindbares Turbinenrad und ein Leitrad aufweist, wobei die Räder zusammen einen mit Hydraulikflüssigkeit gefüllten Wandlerkreislauf bilden. Eine Wandlerüberbrückungskupplung, die ein mittels Hydraulikdruck im Wandlerkreislauf an eine Innenwand des Wandlergehäuses anpreßbares, zwischen dem Wandlergehäuse und dem Turbinenrad angeordnetes, ringscheibenförmiges Überbrükkungsbauteil aufweist, ist in dem Drehmomentwandler vorgesehen, sowie ein zwischen der Wandlerüberbrückungskupplung und dem Wandlergehäuse ausgebildeter Raum, der mit einer Axialbohrung der Abtriebswelle verbunden ist, wobei an der dem Wandlergehäuse abgewandten Seite der Wandlerüberbrükkungskupplung ein Anschluß für einen Wandlerkreislauf vorgesehen ist.

Diese hydrodynamischen Drehmomentwandler finden aus Komfortgründen in Kraftfahrzeugen und insbesondere in Personenkraftwagen breiten Einsatz. Um in Betriebsphasen, die keine Schaltungen eines mit dem Drehmomentwandler verbundenen Getriebes erfordern, Energieverluste zu vermeiden, die durch Schlupf zwischen dem Pumpenrad und dem Turbinenrad bedingt sind, sind diese Drehmomentwandler mit der Überbrückungskupplung versehen. Das in gewisser Weise als Kolben wirksame Überbrückungsbauteil dieser Überbrückungskupplung übernimmt in seinem an das Wandlergehäuse angepressten Zustand unmittelbar die Drehmomentübertragung zwischen dem Wandlergehäuse und der Abtriebswelle. Dabei wird die Reibfläche zwischen dem Überbrückungsbauteil und dem Wandlergehäuse durch die Hydraulik-Flüssigkeitsströmung gekühlt, die beispielsweise durch Zwischenräume zwischen dem Wandlergehäuse und dem an das Wandlergehäuse angepreßten Überbrükkungsbauteil hindurch in den Raum zwischen dem Überbrükkungsbauteil und dem Wandlergehäuse und von dort in eine Axialbohrung der Abtriebswelle strömt.

Es ist bekannt, Wandlerüberbrückungskupplungen mit Schlupf zu betreiben, wobei dieser Schlupf je nach Auslegung des Antriebsstranges und/oder in Abhängigkeit der eingelegten Getriebestufe und/oder des Betriebszustandes des mit dem Strömungswandler zusammenwirkenden Antriebes entweder kurzzeitig, z. B. bei Schaltvorgängen, oder über den gesamten Betriebsbereich des Strömungswandlers als Dauerschlupf auftreten kann. Während der Schlupfphasen fällt im Bereich des Reibbelages bzw. der Reibflächen eine Verlustleistung in Form von Wärme an, die bei bestimmten Betriebszuständen sehr hoch sein kann; derartige Betriebszustände sind beispielsweise vorhanden bei Bergfahrt mit Anhänger, bei der über längerer Zeit eine hohe Verlustleistung anfallen kann und beim Wechseln vom unüberbrückten zum überbrückten Zustand der Wandlerkupplung, bei dem aufgrund des zeitweise hohen Schlupfes in einer kurzen Zeitspanne eine sehr hohe Verlustleistung bzw. Wärmemenge auftreten kann.

Es wurden daher bereits hydrodynamische Drehmomentwandler für die Automatgetriebe von Kraftfahrzeugen vorgeschlagen, bei denen Maßnahmen getroffen wurden zur Erzeugung eines die thermische Belastung der Wandlerüberbrükkungskupplung reduzierenden Ölflusses. So beschreibt die EP 78651 einen Strömungswandler mit einer Überbrückungskupplung, bei der auf der dem Reibbelag bzw. der Reibfläche abgekehrten Seite des Ringkolbens Kanäle vorgesehen sind, die über Öffnungen einerseits mit der axial zwischen einer radialen Wandung des Gehäuses und dem Ringkolben gebildeten ersten Kammer und andererseits mit der zweiten das Turbinen- und Pumpenrad aufnehmenden Kammer verbunden sind. Über die Kanäle strömt Öl von der zweiten Kammer in die erste Kammer, welches zur Kühlung der im Drehmomentfluß zwischen dem Ringkolben und der Turbinennabe vorgesehenen viskosen Kupplung dient.

Der hierbei erzeugte Ölstrom bewirkt jedoch, dass das von der Überbrückungskupplung übertragbare Moment in Folge von im Ölstrom auftretenden dynamischen bzw. kinetischen Vorgängen verringert wird. Die Drehmomentübertragungskapazität der Überbrückungskupplung nimmt dabei mit zunehmender Drehzahl sowie mit zunehmenden Volumenstrom an Öl ab.

Ein weiterer Nachteil ist darin zu sehen, dass der Ölstrom abhängig von der Temperatur und damit der Viskosität des Öls sowie der Druckdifferenz zwischen den beidseits des Wandlerkolbens anstehenden Drücken ist.

Es wurden auch bereits hydrodynamische Drehmomentwandler mit Überbrückungskupplungen vorgeschlagen, bei denen die Reibbeläge mit Nuten zur Ölführung und Kühlung versehen sind; die EP 0 428 248 beschreibt einen hydrodynamischen Wandler, dessen Wandlerüberbrückungskupplung einen ringförmigen Reibbelag aufweist, in dem Kanäle vorgesehen sind, um das Öl aus dem Druckraum über den ringförmigen Reibbelag strömen zu lassen und dadurch Wärme aus dem Reibbelag abzuführen, wenn dieser kontinuierlich am feststehenden Deckel unter Schlupf vorbeiläuft.

Die DE A 44 20 959 beschreibt einen hydrodynamischen Strömungswandler mit einer Wandlerüberbrückungskupplung, wobei im radialen Bereich der Reibflächen in wenigstens einem der die Reibflächen tragenden oder bildenden Bauteile Kanäle vorgesehen sind, die bei axialer Anlage der Reibflächen einen Ölfluß von der einen Druckkammer über die Kanäle radial zur Drehachse des Strömungswandler hin ermöglichen. Die Längenabmessung und die Form dieser Kanäle bzw. Ausstanzungen muß dabei derart erfolgen, dass der auftretende Strömungswiderstand auf den kritischen Betriebsfall des Drehmomentwandlers bzw. der Wandlerüberbrückungskupplung ausgelegt ist; dies bedeutet, dass auch bei maximal möglicher Öltemperatur nur soviel Öl von der zweiten Kammer in die erste Kammer ablaufen darf, dass der Systemdruck im Drehmomentwandler nicht zusammenbricht.

Diesen beiden letzteren Lösungen ist gemeinsam, dass die Kanäle oder Nuten in einem der Reibbeläge eine direkte hydraulische Verbindung zwischen den beiden Druckräumen herstellt. Dies führt zu einer starken Abhängigkeit des Öldurchflusses von der Kanaltiefe, wobei je nach dem Herstellungsverfahren große Toleranzen der Kanaltiefe auftreten. Ferner verschleissen diese Kanäle häufig, sodass eine große Vorhaltung der Kanäle erfolgen muß, wodurch die naß laufende Kupplung im Neuzustand einen zu hohen Volumenstrom aufnimmt, den ein übliches Kraftfahrzeuggetriebe nicht bereitstellen kann.

Es sind ferner als Sacknuten ausgebildete Kanäle ohne Durchströmung bekannt, die jedoch keinerlei Belagkühlung ermöglichen.

Ferner sind Bremsscheiben und Kupplungen bekannt geworden, die Vertiefungen zur selbstinduzierten Kühlung durch Luft oder Öl aufweisen, jedoch dichten diese nicht den radial äußeren gegen den radial inneren Rand ab, sodass die Anpressung nicht mittels des Kühlfluids erfolgen kann. Nur bei sehr aufwendigen Drei-Kanal-Wandlern können derartige als Nuten ausgebildete Kanäle verwendet werden, wobei jedoch in diesen Fällen das Kühlöl nicht zugleich das Drucköl ist.

Aufgabe der vorliegenden Erfindung ist es, eine nasse schlupfende Reibkupplung, insbesondere für die Wandlerüberbrückungskupplung eines hydrodynamischen Drehmomentwandlers zu schaffen, wobei ein mit der Schlupfdrehzahl ansteigender Kühlölstrom eine ausreichende Kühlung unabhängig vom Anpreßdruck der Reibflächen gewährleistet und die einfach im Aufbau und billig in der Herstellung ist.

Ausgehend von einer Reibkupplung der eingangs näher genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Die Erfindung sieht also eine schlupfende Reibkupplung vor, die zumindest ein in Öl laufendes Paar von Reibflächen enthält, wobei das Reibflächenpaar über eine von außen hydraulisch gesteuerte Öldruckdifferenz an einem Druckkolben unter Differenzdrehzahl gegeneinander gepreßt werden kann, derart, dass diese Differenzdrehzahl in einem bestimmten Zeitraum durch die Reibkupplung verringert werden kann oder auch dauerhaft stationär geregelt werden kann. Zu diesem Zweck dichtet das Reibflächenpaar im druckbeaufschlagten Zustand den Druckraum hohen Drucks, der radial außen liegt, gegen den Druckraum niedrigen Drucks ab, der radial innen liegt, wobei in eine Reibfläche ölführende Vertiefungen eingebracht sind, welche in unmittelbarer hydraulischer Verbindung zum radial innen liegenden Druckraum niedrigen Drucks stehen; die Vertiefungen bilden Kanäle, die im radial inneren Druckraum beginnen und in Umfangsrichtung versetzt wieder in denselben inneren Druckraum zurückführen; diese Vertiefungen haben einen derartigen Verlauf, dass bei Schlupfen der Kupplung die Schleppwirkung der in Umfangsrichtung vorübergleitenden Reibfläche entlang der Vertiefungen, d. h. der Kanäle, eine Komponente längs der Vertiefungen besitzt, sodass in den Vertiefungen eine mit der Schlupfdrehzahl steigende Öldurchströmung induziert wird, die die Reibfläche kühlt.

Vorteilhafterweise strömt kühleres Öl durch eine oder mehrere Öffnungen im Druckkolben aus dem Druckraum hohen Drucks in den radial innerhalb des Reibflächenpaars liegenden Druckraum niedrigen Öls derart, dass unmittelbar in den Bereich der Ein- und Austritte der Vertiefungen gelangt, wo es sich mit dem heißer. Öl vermischt und durch den oben erwähnten Schleppeffekt durch die Vertiefungen gepumpt wird.

Die erfindungsgemäße Reibkupplung bietet den Vorteil einer bedarfsangepaßten schlupfabhängigen Reibflächenkühlung, wie es insbesondere für Wandlerüberbrückungskupplungen erforderlich ist; der Öldurchfluß durch den Wandler ist dabei unabhängig von den als Kühlnuten ausgebildeten Vertiefungen einstellbar, z. B. über Blenden; der verringerte Öldurchfluß im Neuzustand gegenüber den herkömmlichen Kurzschlußnuten mit ihrer Vorhaltung aufgrund von Verschleiß und Toleranzen führt dazu, dass das Getriebe weniger Öl bereitstellen muß; es erfolgt kein Gegendruckaufbau in den Nuten und damit keine Verringerung der Übertragungsfähigkeit; die Reibkupplung ist einfach und billig herstellbar ohne enge Toleranzanforderungen; die Reibkupplung bietet ein neutrales Verhalten gegenüber Zug und Schub, wobei die Nuten zur Schleppmomentreduzierung bei Druckumkehr als Sacknuten wirken, die einen Ruck zwischen Reibbelag und Reibfläche bewirken, welcher als Abhebedruck wirkt.

Im folgenden wird die Erfindung anhand der Zeichnung näher erläutert, in der vorteilhaftes Ausführungsbeispiele dargestellt sind.
Es zeigen:
- Fig. 1: schematisch einen Schnitt durch einen hydrodynamischen Drehmomentwandler mit Wandlerüberbrückungskupplung;
- Fig. 2: eine Draufsicht auf einen Reibbelag mit den erfindungsgemäß ausgetalteten Vertiefungen und
- Fig. 3 bis 8: verschiedene Formen von erfindungsgemäßen Vertiefungen in den Reibbelägen.

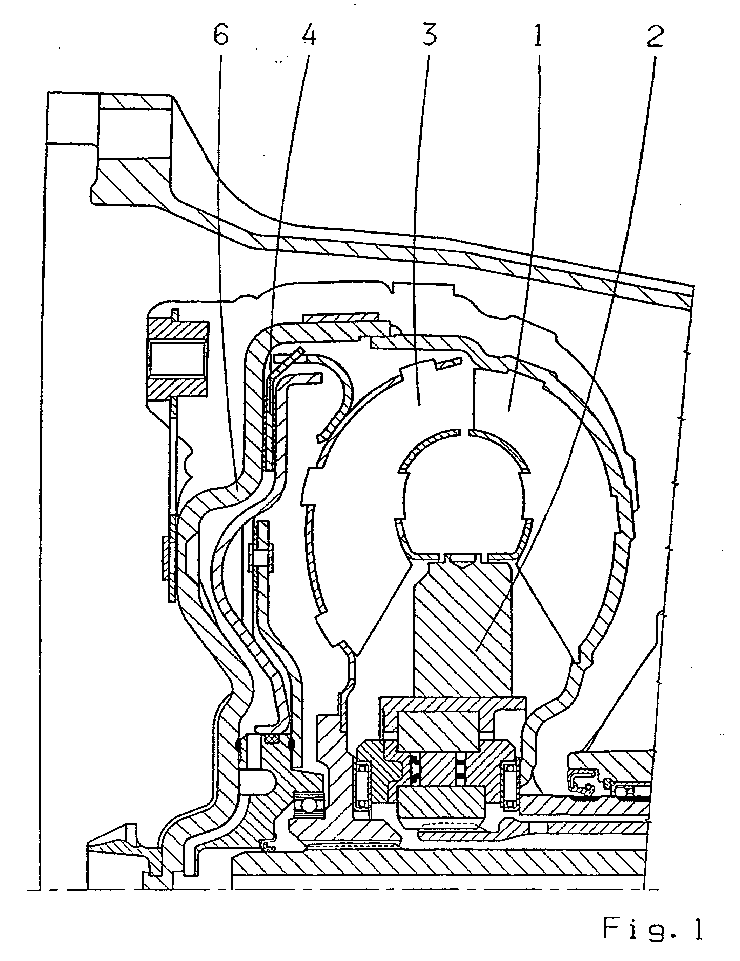

Da hydrodynamische Wandler für Automatgetriebe von Kraftfahrzeugen dem Fachmann gut bekannt sind, sind bei dem in Fig. 1 dargestellten schematischen Schnitt nur die wichtigsten Teile mit Bezugszeichen versehen; so bedeuten 1 das Pumpenrad, 2 das Leitrad und 3 das Turbinenrad, die in einem Gehäuse 6 angeordnet sind. In herkömmlicher Weise ist im Gehäuse 6 eine Wandlerüberbrückungskupplung 4 vorgesehen, wobei eine der Reibflächen mit einem verstellbaren Kolben 5 verbunden ist. Die Überbrückungskupplung ist in herkömmlicher Weise wirkungsmäßig parallel zum Drehmomentwandler angeordnet.

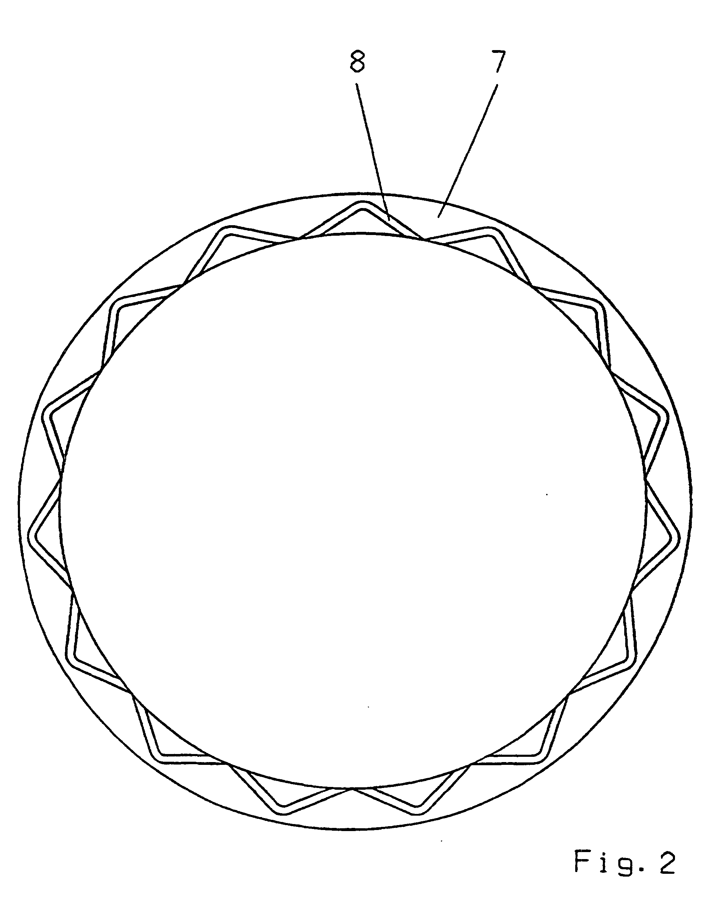

Um diese Wandlerüberbrückungskupplung über einen Großteil des Betriebsbereiches des hydrodynamischen Wandlers mit Schlupf betreiben zu können, wobei während der Schlupfphasen im Reibeingriffsbereich der Wandlerüberbrückungskupplung eine Verlustleistung in Form von Wärme anfällt, die bei bestimmten Betriebszuständen zu hoch ist und zu einer Zerstörung zumindest der Reibbelagoberfläche sowie eines Teils des im Innenraum vorhandenen Öls führen kann, ist nun erfindungsgemäß, wie es in Fig. 2 in Draufsicht gezeigt ist, vorgesehen, dass mindestens einer der Reibbeläge 7 mit Vertiefungen 8, 8'... in Form von im Reibbelag eingebrachten Kanälen bzw. Nuten versehen ist, die in unmittelbarer hydraulischer Verbindung zum radial innen liegenden Druckraum niedrigen Drucks stehen. Anfang und Ende einer jeden Nut 8, 8' ist mit demselben Druckraum verbunden, d. h. beim dargestellten Ausführungsbeispiel mit dem radial innen liegenden Druckraum niedrigen Drucks, wobei Anfang und Ende einer jeden Nut 8, 8' einen vorgegebenen Abstand voneinander aufweisen. Da Anfang und Ende einer jeden Nut im gleichen Druckraum münden, wird durch das Reibflächenpaar im druckbeaufschlagten Zustand der radial außen liegende Druckraum hohen Drucks gegen den radial innen liegenden Druckraum niedrigen Drucks abgedichtet. Bei schlupfender Reibkupplung erzeugt die Schleppwirkung der in Umfangsrichtung vorübergleitenden Reibfläche entlang der Nuten 8, 8' eine Komponente in Längsrichtung der Nuten, sodass in diesen eine mit der Schlupfdrehzahl steigende Öldurchströmung induziert wird, die die Reibfläche kühlt.

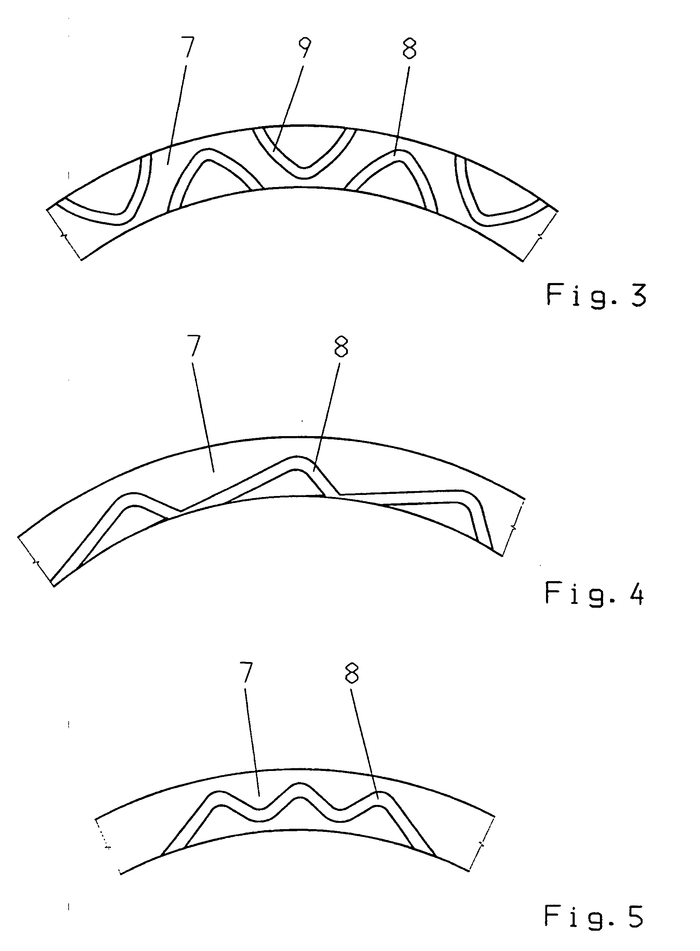

Der Ausschnitt aus einem Reibbelag 7 in Fig. 3 läßt erkennen, dass hierbei zum einen Vertiefungen in Form von Nuten 8 vorgesehen sind, die wie bei dem in Fig. 2 dargestellten Ausführungsbeispiel mit dem radial innen liegenden Druckraum niedrigen Drucks verbunden sind, während zugleich in den Bereichen zwischen diesen Nuten 8 Nuten 9 vorgesehen sind, deren Anfang und Ende einen vorgegebenen Abstand voneinander aufweisen und die in den radial außen liegenden Druckraum hohen Drucks münden. Auch hier erfolgt eine Abdichtung durch das Reibflächenpaar im druckbeaufschlagten Zustand, da keine der Nuten 8, 9 eine Verbindung vom radial innen liegenden Druckraum zum radial außen liegenden Druckraum herstellt. Ein Ölaustausch erfolgt einerseits im radial außen liegenden Druckraum höheren Drucks und andererseits im radial innen liegenden Druckraum niedrigeren Drucks.

Bei dem in Fig. 4 dargestellten Ausführungsbeispiel ist mit 7 wieder ein Ausschnitt einer ringförmigen Reibfläche dargestellt, wobei hierbei die Form der Vertiefungen 8 strömungsgünstig derart ausgestaltet ist, dass der Eintritt der Nuten 8 eine Schaufelwirkung erzeugt, sodass noch mehr Öl in die Nuten 8 eingepumpt wird.

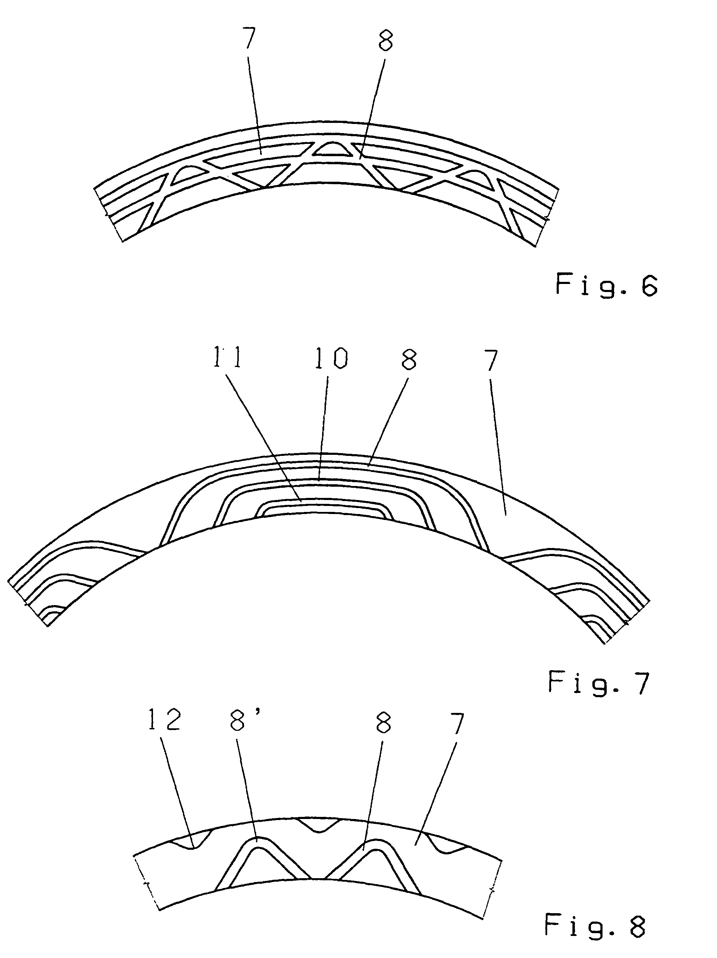

Fig. 5 zeigt eine Nut 8 in einem Reibbelag, die zwischen Anfang und Ende wellenförmig ausgestaltet ist und dabei Umlenkungen aufweist.

Fig. 6 zeigt ein Ausführungsbeispiel einer verzweigten Nut 8 in einem Reibbelag 7, bei der ein möglichst großer Anteil des Reibbelages durch das durch die Schleppwirkung in die Nuten 8 mitgenommenen Öl gekühlt wird.

Bei dem in Fig. 7 dargestellten Ausführungsbeispiel sind mehrere übereinander gelagerte, jedoch nicht miteinander direkt in Verbindung stehende Nuten 8, 10, 11 in einem Reibbelag 7 vorgesehen.

Fig. 8 zeigt hakenförmige Nuten 8, 8', die mit dem radial innen liegenden Druckraum niedrigen Drucks verbunden sind sowie Kerben 12 auf der Außenseite der ringförmigen Reibfläche 7, wodurch die dem radial außen liegenden Druckraum höheren Drucks zugewandte Reibbelagfläche vergrößert wird.

Wesentlich ist also, wie die Figuren erkennen lassen, dass die erfindungsgemäß vorgesehenen Vertiefungen in Form von Nuten oder Kanälen in einem Druckraum beginnen und, in Umfangsrichtung versetzt, wieder in denselben Druckraum zurückführen, wobei diese Kanäle oder Nuten einen derartigen Verlauf aufweisen, dass bei schlupfender Kupplung die Schleppwirkung der in Umfangsrichtung vorübergleitenden Reibfläche entlang der Nuten oder Kanäle eine Komponente in deren Längsrichtung ausbildet, sodass in ihnen eine mit der Schlupfdrehzahl steigende Öldurchströmung induziert wird, welche die Reibfläche kühlt.

Bei einem vorteilhaften, zeichnerisch nicht dargestellten, Ausführungsbeispiel strömt kühleres Öl durch eine oder mehrere Öffnungen im Druckkolben 5 von Fig. 1 aus dem Druckraum hohen Drucks in den radial innerhalb des Reibflächenpaars niedrigen Drucks und zwar unmittelbar in den Bereich der Ein- und Auslässe der Nuten bzw. Kanäle, wo es sich mit dem heißeren Öl vermischt und durch den oben beschriebenen Schleppeffekt durch die Nuten bzw. Kanäle gepumpt wird.

Besonders günstig ist es, wenn die Öffnungen im Druckkolben 5 Blenden sind, da diese den Vorteil einer sehr geringen Toleranz aufweisen. Als besonders vorteilhaft haben sich ein bis zwei Blenden erwiesen, deren Anordnung etwa 0 bis 5 mm radial innerhalb des Belagrandes erfolgt.

Die vorgesehenen Nuten oder Kanäle können außer im Reibbelag auch im Stahl vorgesehen sein oder aber auch in beiden Reibflächen.

Ein Reibflächenpaar kann aus dem Reibbelag einer Reiblamelle, die einseitig oder beidseitig Reibbeläge tragen kann, bestehen und eine Gegenreibfläche mit oder ohne Reibbelag aufweisen.

Bei einem anderen möglichen Ausführungsbeispiel ist der Belag auf dem Wandlerdeckel angebracht, während die Nuten bzw. Kanäle im Kolben vorgesehen sind. Sofern die Vertiefungen als ausgeschnittene oder eingeprägte Nuten hergestellt werden, ist es vorteilhaft, wenn ihre Tiefe mehr als 0,5 mm beträgt.

Die radiale Erstreckung der Nuten kann bis auf 1 ... 5 mm an den radial äußeren Belagrand erfolgen.

Der Nutanteil an der Reibbelagoberfläche beträgt gemäß der Erfindung 20 bis 30 %.

Die Ausformung der Nuten kann je nach den Anforderungen vorgenommen werden, z. B. mit durchgehend gleichem Radius und ohne Querschnittsveränderung mit konstanter Nutbreite über die gesamte Nutlänge oder aber mit einer veränderlichen Nutbreite über die Nutlänge. Die Nuten können jeweils symmetrisch bezüglich Eintritt und Austritt in den Druckraum ausgebildet werden oder aber auch asymmetrisch dazu. Je nach Bedarf können die Nuten eine oder mehrere Umlenkungen aufweisen, wobei insbesondere der Eintritt der Nuten derart ausgestaltet sein kann, wie es in Fig. 4 dargestellt ist, dass eine Schaufelwirkung entsteht, wodurch noch mehr Öl in die Nuten eingepumpt wird.

### Bezugszeichen

- 1: Pumpenrad
- 2: Leitrad
- 3: Turbinenrad
- 4: Kupplung
- 5: Kolben
- 6: Gehäuse
- 7: Reibbelag
- 8: Nut
- 9: Nut
- 10: Nut
- 11: Nut
- 12: Kerbe

## Patentansprüche

1. Schlupfende Reibkupplung, die mindestens ein Paar naßlaufende Reibflächen aufweist, insbesondere schlupfende Wandlerüberbrückungskupplung für den hydrodynamischen Drehmomentwandler eines Kraftfahrzeug-Automatgetriebes, bei der die beiden Reibflächen als Funktion einer externen hydraulischen von einem Druckkolben gesteuerten Öldruckdifferenz mit unterschiedlichen Drehzahlen derart in Richtung zueinander beaufschlagt werden, dass die unterschiedlichen Drehzahlen während eines vorgegebenen Zeitraums durch Reibung der Reibflächen aneinander verringert werden oder einen stationären Zustand annehmen, dass die beiden Reibflächen im druckbeaufschlagten Zustand den radial außen liegenden Druckraum hohen Drucks gegen den radial innen liegenden Druckraum niedrigen Drucks radial abdichten, dass mindestens eine der Reibflächen ölführende Vertiefungen in Form von Nuten oder Kanälen aufweist, deren beide voneinander beabstandete Enden mit demselben Druckraum verbunden sind und die derart ausgestaltet sind, dass bei schlupfender Reibkupplung die in Umfangsrichtung gleitende Reibfläche eine Schleppwirkung ausübt, deren Komponente in den Vertiefungen eine Öldurchströmung als Funktion der Schlupfdrehzahl induziert, welche die Reibfläche kühlt, **dadurch gekennzeichnet, dass** der Nutanteil auf der Oberfläche des Reibbelages 20 bis 30 % beträgt.

2. Vorrichtung nach Anspruch 1, **dadurch gekennzeichnet, dass** die Vertiefungen als Nuten in einem der Reibbeläge ausgebildet sind.

3. Vorrichtung nach Anspruch 1, **dadurch gekennzeichnet, dass** die Vertiefungen als Nuten in beiden Reibflächen ausgebildet sind.

4. Vorrichtung nach einem der vorhergehenden Ansprüche, **dadurch gekennzeichnet, dass** die Vertiefungen ausgeschnittene oder eingeprägte Nuten mit einer Tiefe von größer 0,5 mm sind.

5. Vorrichtung nach einem der vorhergehenden Ansprüche, **dadurch gekennzeichnet, dass** die radiale Erstreckung der Nuten bis auf 1 ... 5 mm an den radial äußeren Belagrand reicht.

6. Vorrichtung nach einem der vorhergehenden Ansprü= che, **dadurch gekennzeichnet, dass** die Nuten jeweils radial außen und radial innen im Reibbelag angeordnet sind, sodass ein Ölaustausch sowohl im Druckraum höheren Drucks als auch im Druckraum niedrigeren Drucks stattfindet.

7. Vorrichtung nach einem der vorhergehenden Ansprüche, **dadurch gekennzeichnet, dass** die Nuten mit gleichmäßigem Radius und ohne Querschnittsveränderung ausgestaltet sind.

8. Vorrichtung nach einem der vorhergehenden Ansprüche, **dadurch gekennzeichnet, dass** die Nutbreite konstant über die Nutlänge ist.

9. Vorrichtung nach einem der vorhergehenden Ansprüche, **dadurch gekennzeichnet, dass** die Nutbreite variabel über die Nutlänge ist.

10. Vorrichtung nach einem der vorhergehenden Ansprüche, **dadurch gekennzeichnet, dass** die Nuten jeweils symmetrisch bezüglich Ein- und Austritt angeordnet sind.

11. Vorrichtung nach einem der vorhergehenden Ansprüche, **dadurch gekennzeichnet, dass** die Nuten asymmetrisch bezüglich Ein- und Austritt sind.

12. Vorrichtung nach einem der vorhergehenden Ansprüche, **dadurch gekennzeichnet, dass** die Nuten sich verzweigen und wieder vereinigen.

13. Vorrichtung nach einem der vorhergebenden Ansprüche, **dadurch gekennzeichnet, dass** die Nuten eine oder mehrere Umlenkungen aufweisen.

14. Vorrichtung nach einem der vorhergehenden Ansprüche, **dadurch gekennzeichnet, dass** der Eintritt der Nuten im Reibbelag derart ausgestaltet ist, dass eine Schaufelwirkung zur Erhöhung der eingepumpten Ölmenge entsteht.

15. Vorrichtung nach einem der vorhergehenden Ansprüche, **dadurch gekennzeichnet, dass** in der Nähe der Ein- und Austritte der Nuten in den Reibbelägen Auslässe vorgesehen sind, die mit Öffnungen im Druckkolben des hydrodynamischen Wandlers in Verbindung stehen, sodass aus dem radial außen liegenden Druckraum hohen Drucks in den radial innen liegenden Druckraum niedrigen Drucks einströmendes kühleres Öl unmittelbar in den Bereich der Einund Austritte der Nuten gelangt.

16. Vorrichtung nach Anspruch 16, **dadurch gekennzeichnet, dass** die Öffnungen im Druckkolben Blenden sind.

17. Vorrichtung nach Anspruch 17, **dadurch gekennzeichnet, dass** im Druckkolben ein oder zwei Blenden vorgesehen sind, die in einem Bereich zwischen 0 und 5 mm radial innerhalb des Belagrandes vorgesehen sind.

18. Vorrichtung nach einem der vorhergehenden Ansprüche, **dadurch gekennzeichnet, dass** das Reibflächenpaar aus einem Reibbelag einer Reiblamelle besteht, die einseitig oder beidseitig Reibbeläge tragen kann und aus einer Gegenreibfläche mit oder ohne Reibbelag besteht.

## Claims

1. Slipping friction clutch comprising at least one pair of wet-running friction surfaces, in particular a slipping converter clutch for a hydrodynamic torque converter in an automatic transmission of a vehicle. In response to an oil pressure differential hydraulically controlled by an external pressure piston, the two friction surfaces are pressed against each other at different speeds in such a way that within a specified period the speed differential is reduced by the friction of the surfaces or a steady state is reached; that the two friction surfaces, when pressurized, seal the radially outer high-pressure chamber against the radially inner low-pressure chamber. At least one of the friction surfaces has oil-conducting recesses in the shape of grooves or ducts, whose opposite ends are linked to the same pressure chamber and which are designed in such a way that slipping friction results in the friction surface sliding in peripheral direction having a trailing effect, whose component force acting as a function of the slip speed induces oil flow in the recesses, which cools the friction surface, **characterized in that** 20 to 30 % of the surface of the friction lining is made up of grooves.

2. Unit according to claim 1, **characterized in that** the recesses take the form of grooves in one of the friction linings.

3. Unit according to claim 1, **characterized in that** the recesses take the form of grooves in both friction surfaces.

4. Unit according to one of the preceding claims, **characterized in that** the recesses represent grooves deeper than 0.5 mm, either cut out or impressed.

5. Unit according to one of the preceding claims, **characterized in that** the radial extension of the grooves reaches up to 1 ... 5 mm within the outer edge of the lining.

6. Unit according to one of the preceding claims, **characterized in that** the grooves are arranged either radially inside or radially outside in the respective linings, so that oil exchange takes place in the higher-pressurized chamber and the lower-pressurized chamber.

7. Unit according to one of the preceding claims, **characterized in that** radius and cross section of the grooves are regular.

8. Unit according to one of the preceding claims, **characterized in that** groove width remains constant for the entire length of a groove.

9. Unit according to one of the preceding claims, **characterized in that** groove width varies over the length of a groove.

10. Unit according to one of the preceding claims, **characterized in that** the grooves are arranged symmetrically regarding inflow and outflow.

11. Unit according to one of the preceding claims, **characterized in that** the grooves are arranged asymmetrically regarding inflow and outflow.

12. Unit according to one of the preceding claims, **characterized in that** the grooves branch out and re-unite.

13. Unit according to one of the preceding claims, **characterized in that** the grooves are provided with one or several deflectors.

14. Unit according to one of the preceding claims, **characterized in that** the groove inlets are embedded in the friction lining in such a way that a shoveling effect increases the amount of oil pumped in.

15. Unit according to one of the preceding claims, **characterized in that** in the vicinity of the inlets and outlets of the grooves embedded in the friction linings, there are outlets communicating with openings in the pressure piston of the hydrodynamic converter, so that the cooler oil flowing from the external high-pressure chamber to the internal low-pressure chamber reaches the area of the inlets and outlets of the grooves.

16. Unit according to claim 16, **characterized in that** the openings in the pressure piston are orifices.

17. Unit according to claim 17, **characterized in that** the pressure piston has one or two orifices in an area 0 to 5 mm radially within the edge of the lining.

18. Unit according to one of the preceding claims, **characterized in that** the friction surface set consists of a friction lining of a friction disk with unilateral or bilateral friction lining and of an opposite friction surface with or without friction lining.

## Revendications

1. Embrayage de friction à glissement, comportant au moins un couple de surfaces de frottement à lubrification constante, en particulier un embrayage de pontage d'un convertisseur de couple hydrodynamique d'une boîte de vitesses automatique pour véhicules automobiles, sachant que les deux surfaces de frottement sont pressurisées l'une par rapport à l'autre - en tant que fonction d'une différence de pression d'huile externe et hydraulique, pilotée par un piston de pression - à différents régimes et de manière à ce que les différents régimes sont réduits pendant une période de consigne par l'effet de frottement des surfaces ou à ce qu'elles assument un état stationnaire, sachant qu'à l'état pressurisé les deux surfaces de frottement assurent l'étanchéité en sens radial de l'espace à haute pression radial extérieur par rapport à l'espace à basse pression radial intérieur, sachant qu'au moins une des surfaces de frottement comporte des évidements de passage d'huile réalisés sous forme d'encoches ou de chenaux, dont les deux extrémités écartées l'une par rapport à l'autre sont connectées au même espace de pression et conçues de manière à ce que, l'embrayage de friction glissant, la surface de frottement glissante dans le sens circonférentiel exerce un effet de traînée, dont la composante dans les évidements induit un flux d'huile en tant que fonction du régime de glissement, refroidissant la surface de frottement, **caractérisé en ce que** le pourcentage d'encoches sur la surface de la garniture de friction est compris entre 20 et 30 %.

2. Equipement selon la revendication 1, **caractérisé en ce que** les évidements sont réalisés sous forme d'encoches dans une des garnitures de friction.

3. Equipement selon la revendication 1, **caractérisé en ce que** les évidements sont réalisés sous forme d'encoches dans les deux garnitures de friction.

4. Equipement selon une des revendications précédentes, **caractérisé en ce que** les évidements sont des encoches découpées ou matricées d'une profondeur > 0,5 mm.

5. Equipement selon une des revendications précédentes, **caractérisé en ce que** l'extension radiale des encoches s'avance jusqu'à 1...5 mm du bord radial extérieur de la garniture.

6. Equipement selon une des revendications précédentes, **caractérisé en ce que** les encoches sont disposées radialement à l'extérieur et à l'intérieur dans la garniture de friction, de façon à ce qu'il y ait un écoulement de l'huile soit dans l'espace à haute pression soit dans l'espace à basse pression.

7. Equipement selon une des revendications précédentes, **caractérisé en ce que** les encoches sont réalisées avec un rayon uniforme et sans variation de section.

8. Equipement selon une des revendications précédentes, **caractérisé en ce que** la largeur des encoches est constante sur toute la longueur des encoches.

9. Equipement selon une des revendications précédentes, **caractérisé en ce que** la largeur des encoches est variable sur toute la longueur des encoches.

10. Equipement selon une des revendications précédentes, **caractérisé en ce que** - au niveau des entrées et sorties - les encoches sont disposées de manière symétrique.

11. Equipement selon une des revendications précédentes, **caractérisé en ce que** - au niveau des entrées et sorties - les encoches sont disposées de manière asymétrique.

12. Equipement selon une des revendications précédentes, **caractérisé en ce que** les encoches se ramifient et se réunissent.

13. Equipement selon une des revendications précédentes, **caractérisé en ce que** les encoches comportent un ou plusieurs renvois.

14. Equipement selon une des revendications précédentes, **caractérisé en ce que** les entrées des encoches dans la garniture de friction sont réalisées de manière à ce que se produit un effet de projection d'huile pour augmenter la quantité d'huile pompée.

15. Equipement selon une des revendications précédentes, **caractérisé en ce que** à proximité des entrées et sorties des encoches dans les garnitures de friction sont prévues des déversoirs communiquant avec les orifices dans le piston de pression du convertisseur hydrodynamique, de manière à ce que l'huile plus froide s'écoulant à partir de l'espace à haute pression radial extérieur vers l'espace à basse pression radial intérieur arrive immédiatement dans la zone des entrées et sorties des encoches.

16. Equipement selon une des revendications précédentes, **caractérisé en ce que** les orifices dans le piston de pression sont des diaphragmes.

17. Equipement selon une des revendications précédentes, **caractérisé en ce que** dans le piston de pression sont prévus un ou plusieurs diaphragmes, disposés dans une zone entre 0 et 5 mm en sens radial à l'intérieur du bord de la garniture.

18. Equipement selon une des revendications précédentes, **caractérisé en ce que** le couple de surfaces de frottement est composé d'une garniture de friction d'un disque de friction, lequel peut être doté d'un seul côté ou des deux côtés de garnitures de friction, et d'une contresurface de frottement dotée ou pas d'une garniture de friction.
